(19) Europäisches Patentamt
European Patent Office
Office européen des brevets

(11) EP 2 521 211 B1

(12) **EUROPEAN PATENT SPECIFICATION**

(45) Date of publication and mention
of the grant of the patent:
**24.02.2016 Bulletin 2016/08**

(21) Application number: **12166188.8**

(22) Date of filing: **30.04.2012**

(51) Int Cl.:
*H01M 10/052* (2010.01)          *H01M 4/505* (2010.01)
*H01M 4/131* (2010.01)          *H01M 4/1391* (2010.01)
*H01M 4/36* (2006.01)          *C01G 45/12* (2006.01)
*C01G 51/00* (2006.01)          *C01G 53/00* (2006.01)

(54) **Electrode active material, preparation method thereof, and electrode and lithium battery containing the same**

Elektrodenaktivmaterial, Herstellungsverfahren dafür und Elektrode und Lithiumbatterie damit

Matériau actif d'électrode, procédé de préparation associé et électrode et batterie au lithium contenant ledit matériau

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.05.2011 KR 20110042623**

(43) Date of publication of application:
**07.11.2012 Bulletin 2012/45**

(73) Proprietor: **Samsung Electronics Co., Ltd.**
**Suwon-si, Gyeonggi-do, 443-742 (KR)**

(72) Inventors:
• **Choi, Won-chang**
**Yongin-si (KR)**
• **Park, Jin-hwan**
**Yongin-si (KR)**

(74) Representative: **Zijlstra, Robert Wiebo Johan**
**Elkington and Fife LLP**
**Prospect House**
**8 Pembroke Road**
**Sevenoaks, Kent TN13 1XR (GB)**

(56) References cited:
**EP-A1- 0 997 956          CA-A1- 2 373 756**
**US-A1- 2003 108 790          US-A1- 2011 076 556**
**US-B1- 6 641 955**

• **FEY G T K ET AL: "MgAl2O4 spinel-coated LiCoO2 as long-cycling cathode materials", JOURNAL OF POWER SOURCES, ELSEVIER SA, CH, vol. 146, no. 1-2, 26 August 2005 (2005-08-26), pages 245-249, XP025269020, ISSN: 0378-7753, DOI: 10.1016/J.JPOWSOUR.2005.03.147 [retrieved on 2005-08-26]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

The present disclosure relates to an electrode active material, a preparation method thereof, and an electrode and a lithium battery including the same.

For smaller and higher performance devices, it is important to increase the energy density of a lithium battery, in addition to decreasing the size and weight thereof. That is, a high-voltage and high-capacity lithium battery becomes important.

For realizing a lithium battery satisfying the above-stated requirements, research is being conducted on cathode active materials for high voltage and high capacity.

When typical cathode active materials for high voltage and high capacity are used, side reactions, such as elution of transition metal and generation of gas, occur at a high temperature and/or a voltage higher than about 4.4 V. Due to the side reactions, the performance of a battery is degraded in a high temperature and high voltage environment.

Therefore, methods for preventing degradation of a battery in a high temperature and high voltage environment are required.

G.T.K Fey et al. in Journal of Power Sources, 146 (2005), pages 245-249 disclose $MgAl_2O_4$ spinel-coated $LiCoO_2$ as a cathode material.

CA 2 373 756 A1 discloses lithium-mixed oxide particles coated with metal- oxide used to improve the characteristics of electrochemical cells.

US 2003/0108790 A1 discloses modification of a $LiMn_2O_4$ spinel oxide with $Li_xCoO_2$, $Li_xNi_{0.5}Co_{0.5}O_2$, $Al_2O_3$, $Cr_2O_3$, MgO, $MgAl_2O_4$ or combinations thereof using a chemical processing procedure followed by heat treatment.

EP 0 997 956 A1 discloses manganese oxide which has a calcium or/and magnesium content of 0.01 to 2.50 mol % based on the moles of manganese, a lithium manganese complex oxide using the manganese oxide, and a cobalt-coated lithium manganese complex oxide for use as a positive electrode active material.

US 2011/076556 A1 discloses positive electrode active materials that are formed with various metal oxide coatings.

US 6,641,955 B1 discloses an anode material for a lithium secondary battery consisting of being coated with an amorphous metal compound formed by a metal capable of alloying with lithium on at least one part of the surface of a carbon material capable of absorbing and releasing lithium ions.

SUMMARY OF THE INVENTION

Provided are electrode active materials capable of preventing degradation of performance of a battery under a condition of a high temperature and high voltage.

Provided are electrodes including the electrode active materials.

Provided are lithium batteries adopting the electrodes.

Provided are methods of manufacturing the electrode active materials.

Additional aspects will be set forth in part in the description which follows and, in part, will be apparent from the description, or may be learned by practice of the presented embodiments.

According to an aspect of the present invention, an electrode active material according to claim 1 or 15 is provided.

According to another aspect of the present invention, an electrode includes the electrode active material.

According to still another aspect of the present invention, a lithium battery includes the electrode.

According to still another aspect of the present invention, a method of manufacturing an electrode active material includes preparing a resulting material obtained by making a core including a cathode active material or an anode active material contact with a spinel-structured lithium-free oxide or a precursor thereof; and selectively firing the resulting material.

BRIEF DESCRIPTION OF THE DRAWINGS

These and/or other aspects will become apparent and more readily appreciated from the following description of the embodiments, taken in conjunction with the accompanying drawings in which:

FIG. 1 illustrates a result of an X-ray diffraction (XRD) experiment on a cathode active material manufactured according to (a) Comparative Example 1;

(b) Example 19; and

(c) independently synthesized $SnMg_2O_4$;

FIG. 2 illustrates a result of an XRD experiment on (a) $MgAl_2O_4$ synthesized by performing a firing process for about 15 minutes; and

(b) $MgAl_2O_4$ synthesized by performing a firing process for about 12 hours;

FIG. 3 illustrates a transmission electron microscope (TEM) image of a cathode active material manufactured according to embodiment 1;

FIG. 4 illustrates results of high rate characteristics experiment on lithium batteries manufactured according to embodiments 126 to 131 and Comparative Example 19 and 20; and

FIG. 5 is a mimetic diagram illustrating a lithium battery according to an embodiment.

DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description.

Hereinafter, an electrode material, a manufacturing method thereof, and an electrode and a battery including the same, according to exemplary embodiments, will be described.

An electrode material according to the invention includes a core capable of occluding and emitting lithium; and a surface treatment layer formed on at least a portion of the core, wherein the surface treatment layer includes a lithium-free oxide having a spinel structure. That is, because at least a portion of a surface of the core capable of occluding and emitting lithium is treated with spinel-structured lithium-free oxide, the surface treatment layer may be formed on at least a portion or all of the core surface.

The spinel-structured lithium-free oxide does not occlude and emit lithium, and thus, is not involved in a battery capacity. Therefore, the surface treatment layer including the oxide may serve, for instance, as a protective layer of the core. That is, the surface treatment layer may serve to suppress a side reaction between the core and an electrolyte. The surface treatment layer may also serve to prevent transition metal from erupting from the core capable of occluding and emitting lithium.

Any spinel-structured oxide including elements of two or more metals, except for lithium, or elements of metalloid may be used as the spinel-structured lithium-free oxide.

The spinel-structured lithium-free oxide has a stronger metal-oxygen bonding in comparison with an oxide having a typical halite crystal structure, for instance, NaCl, CaO, and FeO; and an oxide having a corundum crystal structure, for instance, $Al_2O_3$, $Fe_2O_3$, $FeTiO_3$, and MgO. Therefore, a stable surface treatment layer may be formed under a high temperature and high voltage condition.

According to the invention, the lithium-free oxide is one or more selected from oxides expressed as the following Chemical formula 1.

<Chemical formula 1>    $AB_2O_4$

, where A is one or more selected from a group consisting of tin (Sn), magnesium (Mg), molybdenum (Mo), copper (Cu), zinc (Zn), titanium (Ti), nickel (Ni), calcium (Ca), iron (Fe), vanadium (V), lead (Pb), cobalt (Co), germanium (Ge), cadmium (Cd), mercury (Hg), strontium (Sr), manganese (Mn), aluminum (Al), tungsten (W), and beryllium (Be); B is one or more selected from a group consisting of Mg, Zn, Al, V, Mn, gallium (Ga), chromium (Cr), Fe, rhodium (Rh), Ni, indium (In), Co, and Mn; and A is different form B.

For instance, the lithium-free oxide may be one or more selected from a group consisting of $SnMg_2O_4$, $SnZn_2O_4$, $MgAl_2O_4$, $MoAl_2O_4$, $CuAl_2O_4$, $ZnAl_2O_4$, $ZnV_2O_4$, $TiMn_2O_4$, $ZnMn_2O_4$, $NiAl_2O_4$, $MgGa_2O_4$, $ZnGa_2O_4$, $CaGa_2O_4$, $TiMg_2O_4$, $VMg_2O_4$, $MgV_2O_4$, $FeV_2O_4$, $ZnV_2O_4$, $MgCr_2O_4$, $MnCr_2O_4$, $FeCr_2O_4$, $CoCr_2O_4$, $NiCr_2O_4$, $CuCr_2O_4$, $ZnCr_2O_4$, $CdCr_2O_4$, $TiMn_2O_4$, $ZnMn_2O_4$, $MgFe_2O_4$, $TiFe_2O_4$, $MnFe_2O_4$, $CoFe_2O_4$, $NiFe_2O_4$, $CuFe_2O_4$, $ZnFe_2O_4$, $CdFe_2O_4$, $AlFe_2O_4$, $PbFe_2O_4$, $MgCo_2O_4$, $TiCo_2O_4$, $ZnCo_2O_4$, $SnCo_2O_4$, $FeNi_2O_4$, $GeNi_2O_4$, $MgRh_2O_4$, $ZnRh_2O_4$, $TiZn_2O_4$, $SrAl_2O_4$, $CrAl_2O_4$, $MoAl_2O_4$, $FeAl_2O_4$, $CoAl_2O_4$, $MgGa_2O_4$, $ZnGa_2O_4$, $MgIn_2O_4$, $CaIn_2O_4$, $FeIn_2O_4$, $CoIn_2O_4$, $NiIn_2O_4$, $CdIn_2O_4$, and $HgIn_2O_4$.

According to the invention, in an X-ray diffraction spectrum of the lithium-free oxide, a ratio of a peak intensity of a (111) crystal face to a peak intensity of a (311) crystal face, i.e., I(111)/I(311), is more than about 0.3. For instance, the I(111)/I(311) may range from about 0.3 to about 0.9.

Also, on an X-ray diffraction spectrum of the lithium-free oxide, a ratio of a peak intensity of a (111) crystal face to a peak intensity of a (400) crystal face, i.e., I(111)/I(400), may be more than about 0.6. For instance, the I(111)/I(400) may range from about 0.6 to about 1.5.

According to the invention, the lithium-free oxide content is larger than 0wt% and less than 10wt% on a basis of a total weight of electrode active material. For instance, the lithium-free oxide content may be larger than 0wt% and less than about 5wt%.

The surface treatment layer of the electrode active material may include two or more elements selected from a group consisting of metal and metalloid with an atomic weight of 9 or more, and the elements may be selected from a group consisting of Sn, Mg, Mo, Cu, Zn, Ti, Ni, Ca, Al, V, Mn, Ga, Fe, Cr, Rh, In, Pb, Co, Ge, Cd, Hg, Sr, W and Be.

Contents of the two or more elements included in the surface treatment layer and selected from a group consisting of metal and metalloid with an atomic weight of 9 or more may be less than about 10wt%, for instance, may be less than about 5wt% on a basis of a total weight of electrode active material.

A composition ratio of the two or more elements of the surface treatment layer selected from a group consisting of metal and metalloid with an atomic weight of 9 or more may be about 4:2.1 to about 4:3.9. For instance, the composition ratio may be about 4:2.5 to about 4:3.5. For instance, the composition ratio may be about 4:2.9 to about 4:3.1. For instance, the composition ratio may be about 4:3. The composition ratio corresponds to a composition ratio of oxygen to A+B in lithium-free oxide included in the surface treatment layer and having a composition formula of $AB_2O_4$.

A thickness of the surface treatment layer of the electrode active material may range from about 0.1 nm to about 1 $\mu$m. For instance, the thickness of the surface treatment layer may range from about 1 nm to about 1 $\mu$m. For instance, the thickness of the surface treatment layer may range from about 1 nm to about 100 nm. For instance, the thickness of the surface treatment layer may range from about 1 nm to about 30 nm.

An average particle diameter of the core of the electrode active material may range from about 10 nm to about 50 $\mu$m. For instance, the average particle diameter of the core may range from about 10 nm to about 30 $\mu$m. For instance, the average particle diameter of the core may range from about 1 $\mu$m to about 30 $\mu$m.

The core capable of occluding and emitting lithium in the electrode active material may include cathode active material. The cathode active material may be lithium transition metal oxide. Any lithium transition metal oxide for a cathode of a lithium battery which is used in the art may be used as the lithium transition metal oxide. For instance, the lithium transition metal oxide has a spinel structure or a layered structure.

The lithium transition metal oxide may be a single composition, compound or a composite of two or more compounds. For instance, the lithium transition metal oxide may be a composite of two or more compounds having layered-structures. For instance, the lithium transition metal oxide may be a composite of a compound having a layered-structure and a compound having a spinel-structure.

For instance, the lithium transition metal oxide may include over-lithiated oxide (OLO) or lithium transition metal oxide with an average operating voltage higher than about 4.3 V. For instance, an average operating voltage of the lithium transition metal oxide may range from about 4.3 V to about 5.0 V.

The average operating voltage means a value obtained by dividing a charge/discharge electric energy by a charge/discharge quantity of electricity when a battery is charged and discharged to an upper limit and a lower limit of a charge/discharge voltage at a recommendation operating voltage of the battery.

The core may include, for instance, compounds expressed as the following Chemical formulas 1 and 2.

<Chemical formula 1>  $Li[Li_aMe_{1-a}]O_{2+d}$

<Chemical formula 2>  $Li[Li_bMe_cM'_e]O_{2+d}$

, where $0 < a < 1$, $b + c + e = 1$; $0 < b < 1$, $0 < e < 0.1$; $0 \leq d \leq 0.1$, Me is one or more metals selected from a group consisting of Ti, V, Cr, Mn, Fe, Co, Ni, Cu, Al, Mg, Zr, and B, and M' is one or more metals selected from a group consisting of Mo, W, Ir, Ni, and Mg. For example, in chemical formula 1, two or more metals of Me can have various composition ratios as long as the sum of them satisfies 1-a.

Also, the core may include compounds expressed as the following Chemical formulas 3 to 7.

<Chemical formula 3>  $Li_xCo_{1-y}M_yO_{2-\alpha}X_\alpha$

<Chemical formula 4>  $Li_xCo_{1-y-z}Ni_yM_zO_{2-\alpha}X_\alpha$

<Chemical formula 5>  $Li_xMn_{2-y}M_yO_{4-\alpha}X_\alpha$

<Chemical formula 6>  $Li_xCO_{2-y}M_yO_{4-\alpha}X_\alpha$

<Chemical formula 7>  $Li_xMe_yM_zPO_{4-\alpha}X_\alpha$

,where $0.90 \leq x \leq 1.1$, $0 \leq y \leq 0.9$, $0 \leq z \leq 0.5$, $1-y-z > 0$, $0 \leq a \leq 2$, Me is one or more metals selected from a group consisting of Ti, V, Cr, Mn, Fe, Co, Ni, Cu, Al, Mg, Zr, and B, M is one or more elements selected from a group consisting of Mg, Ca, Sr, Ba, Ti, Zr, Nb, Mo, W, Zn, Al, Si, Ni, Mn, Cr, Fe, Mg, Sr, V, and rare-earth elements, and X is an element selected from a group consisting of O, F, S, and P.

In another aspect of the invention, the core includes compounds expressed as the following Chemical formulas 8 and 9.

<Chemical formula 8>          $pLi_2MO_3\text{-}(1\text{-}p)LiMeO_2$

<Chemical formula 9>          $xLi_2MO_{3-y}LiMeO_2\text{-}zLi_{1+d}M'_{2-d}O_4$

, where $0 < p < 1$, $x + y + z = 1$; $0 < x < 1$, $0 < y < 1$, $0 < z < 1$; $0 \leq d \leq 0.33$, M is one or more elements selected from a group consisting of Mg, Ca, Sr, Ba, Ti, Zr, Nb, Mo, W, Zn, Al, Si, Ni, Mn, Cr, Fe, Mg, Sr, V, and rare-earth elements, Me is one or more metals selected from a group consisting of Ti, V, Cr, Mn, Fe, Co, Ni, Cu, Al, Mg, Zr, and B, M' is one or more metals selected from a group consisting of Ti, V, Cr, Mn, Fe, Co, Ni, Cu, Al, Mg, Zr, and B.

A compound of Chemical formula 8 may have a layered-structure, and $Li_2MO_3$-$LiMeO_2$ and $Li_{1+d}M'_{2-d}O_4$ as compounds of Chemical formula 9 may have a layered-structure and a spinel-structure, respectively.

The core capable of charging and discharging lithium in the electrode active material may include an anode active material. The anode active material may include one or more selected from a group consisting of lithium metal, metal which is alloyable with lithium, transition metal oxide, non-transition metal oxide, and carbon material. Any anode active material for a lithium battery which is used in the art may be used as the anode active material.

For instance, the metal, which is alloyable with lithium, may be Si, Sn, Al, Ge, Pb, Bi, Sb, Si-Y alloy, (Y is alkali metal, alkali earth metal, group 13 element, group 14 element, transition metal, rare-earth metal, or a combination thereof, and is not Si), and Sn-Y alloy (Y is alkali metal, alkali earth metal, group 13 element, group 14 element, transition metal, rare-earth metal, or a combination thereof, and is not Sn). The element Y may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

For instance, the transition metal oxide may be lithium titanium oxide, vanadium oxide, or lithium vanadium oxide.

For instance, the non-transition oxide may be $SnO_2$ or $SiO_x$ ($0 < x < 2$).

The carbon material may be crystalline carbon, amorphous carbon, or a combination thereof. The crystalline carbon may be natural graphite of amorphous type, plate type, flake type, spherical type, or fiber type, or synthetic graphite. The amorphous carbon may be soft carbon (low-temperature-fired carbon), hard carbon, mesophase pitch carbide, or fired coke.

According to the invention, the surface treatment layer of the electrode active material is formed by contacting a spinel-structured lithium-free oxide or a precursor thereof with the core and by firing it. That is, the core capable of occluding and emitting lithium is contacted by a spinel-structured lithium-free oxide or a precursor thereof, and this contacted structure is selectively fired for a surface-treated electrode active material to be manufactured. When the precursor of lithium-free oxide is used, a firing process may be performed. During the firing process, if a firing time is less than about three hours, a spinel-structured lithium-free oxide may not be obtained from the precursor.

An electrode according to another embodiment may include the above-described electrode active material. The electrode may be a cathode or an anode.

The cathode may be manufactured as follows.

A cathode active material composition is prepared by mixing a cathode active material having a surface treatment layer formed on at least a portion of a surface thereof, a conducting agent, a binder, and a solvent. The cathode active material composition may be directly coated on an aluminum current collector and dried for manufacturing a cathode plate on which a cathode active layer is formed. Differently, the cathode active material composition may be casted on a separate support, and then a film peeled from the support is laminated on an aluminum current collector to manufacture a cathode plate on which a cathode active layer is formed.

As the conducting agent, carbon black, natural graphite, artificial graphite, acetylene black, ketjen black, carbon fiber; metal powder, metal fiber, or metal tube such as carbon nanotube, copper, nickel, aluminum, and silver; and conductive polymer such as polyphenylene derivatives may be used; however, the conducting agent is not limited thereto, and any conducting agent used in the art may be used.

As the binder, vinylidene fluoride/hexafluoropropylene co-polymer, polyvinylidene fluoride (PVDF), polyacrylonitrile, poly(methyl methacrylate), polytetrafluoroethylene (PTFE), mixture of the foregoing polymers, and styrene butadiene rubber polymer may be used, and as the solvent, N-methylpyrrolidone (NMP), acetone, and water may be used; however, the solvent is not limited thereto, and any material used in the art may be used. Contents of the cathode active material, the conducting agent, the binder, and the solvent may be typical levels used for a lithium battery.

The anode may be manufactured using the same method as that for the cathode except that an anode active material instead of a cathode active material is used.

For instance, the anode may be manufactured as follows.

An anode active material composition is manufactured by mixing an anode active material having a surface treatment layer formed on at least a portion of a surface thereof, a conducting agent, a binder, and a solvent. The anode active material composition may be directly coated on a copper current collector for manufacturing an anode plate. Differently, the anode active material composition may be casted on a separate support, and then an anode active material film peeled from the support is laminated on a copper current collector to manufacture an anode plate.

The same conducting agent, binder, and solvent as in the cathode may be used for the anode active material. According to circumstances, a plasticizer may be added to the cathode active material composition and the anode active material composition to form pores in an electrode plate.

Contents of the anode active material, the conducting agent, the binder, and the solvent may be typical levels used for a lithium battery. According to use and structure of a lithium battery, one or more of the conducting agent, the binder, and the solvent may be omitted.

An electrode according to another embodiment may include a current collector; and an electrode active material layer and a surface treatment layer formed thereon, wherein the surface treatment layer comprises a lithium-free oxide having a spinel structure. The electrode active material layer may include an electrode active material, a conducting agent, and a binder. Since the surface treatment layer is formed on an electrode surface, a side reaction of an electrode may be suppressed and transition metal may be prevented from erupting from the electrode.

That is, after the electrode active material layer is formed, the surface treatment layer may be separately formed on the electrode active material layer.

The lithium-free oxide of the electrode may be expressed as the following Chemical formula 1.

<Chemical formula 1>　　　　$AB_2O_4$

, where A is one or more selected from a group consisting of Sn, Mg, Mo, Cu, Zn, Ti, Ni, Ca, Fe, V, Pb, Co, Ge, Cd, Hg, Sr, Mn, Al, W, and Be; B is one or more selected from a group consisting of Mg, Zn, Al, V, Mn, Ga, Cr, Fe, Rh, Ni, In, Co, and Mn; and A is different from B.

For instance, the lithium-free oxide may be one or more selected from a group consisting of $SnMg_2O_4$, $SnZn_2O_4$, $MgAl_2O_4$, $MoAl_2O_4$, $CuAl_2O_4$, $ZnAl_2O_4$, $ZnV_2O_4$, $TiMn_2O_4$, $ZnMn_2O_4$, $NiAl_2O_4$, $MgGa_2O_4$, $ZnGa_2O_4$, $CaGa_2O_4$, $TiMg_2O_4$, $VMg_2O_4$, $MgV_2O_4$, $FeV_2O_4$, $ZnV_2O_4$, $MgCr_2O_4$, $MnCr_2O_4$, $FeCr_2O_4$, $CoCr_2O_4$, $NiCr_2O_4$, $CuCr_2O_4$, $ZnCr_2O_4$, $CdCr_2O_4$, $TiMn_2O_4$, $ZnMn_2O_4$, $MgFe_2O_4$, $TiFe_2O_4$, $MnFe_2O_4$, $CoFe_2O_4$, $NiFe_2O_4$, $CuFe2O4$, $ZnFe2O4$, $CdFe2O4$, $AlFe_2O_4$, $PbFe2O4$, $MgCo_2O_4$, $TiCo_2O_4$, $ZnCo_2O_4$, $SnCo_2O_4$, $FeNi_2O_4$, $GeNi_2O_4$, $MgRh_2O_4$, $ZnRh_2O_4$, $TiZn_2O_4$, $SrAl_2O_4$, $CrAl_2O_4$, $MoAl_2O_4$, $FeAl_2O_4$, $CoAl_2O_4$, $MgGa_2O_4$, $ZnGa_2O_4$, $MgIn_2O_4$, $CaIn_2O_4$, $FeIn_2O_4$, $CoIn_2O_4$, $NiIn_2O_4$, $CdIn_2O_4$, and $HgIn_2O_4$.

The surface treatment layer of the electrode may be formed by contacting the lithium-free oxide, which has a spinel structure on a surface of the active material layer, or a precursor thereof with the core and by selectively firing it.

A lithium battery according to another embodiment adopts the electrode. The lithium battery, for instance, may be manufactured as follows.

Firstly, a cathode and an anode according to an embodiment are manufactured as described above.

Next, a separator to be inserted between the cathode and the anode is prepared. Any separator typically used for a lithium battery may be used. A separator which has low resistance to ion movement of an electrolyte and has an excellent ability in containing an electrolyte solution may be used. For instance, the separator may be selected from glass fiber, polyester, Teflon, polyethylene, polypropylene, PTFE, or a combination thereof, wherein the selected separator may be a non-woven fiber type or a woven fiber type separator. For instance, a windable separator such as polyethylene and polypropylene may be used for a lithium-ion battery, and a separator having an excellent ability in containing an organic electrolyte solution may be used for a lithium-ion polymer battery. For instance, the separator may be manufactured as follows.

A separator composition is prepared by mixing a polymer resin, a filler, and a solvent. The separator composition may be directly coated on an electrode and dried for forming the separator. Or, the separator composition may be casted on a support and dried, and then a separator film peeled from the support may be laminated on an electrode for forming the separator.

The polymer resin used for manufacturing the separator is not particularly limited, and thus, any material used as a bonding material of an electrode plate may be used. For instance, vinylidene fluoride/hexafluoropropylene co-polymer, PVDF, polyacrylonitrile, poly(methyl methacrylate), or a combination thereof may be used.

Next, an electrolyte is prepared.

For instance, the electrolyte may be an organic electrolyte solution. The electrolyte may be a solid. For instance, the electrolyte may be a boron oxide or lithium oxynitride; however, it is not limited thereto, and any solid electrolyte used in the art may be used. The solid electrolyte may be formed on the anode using a sputtering method.

For instance, an organic electrolyte solution may be prepared. The organic electrolyte solution may be manufactured by dissolving lithium salt in an organic solvent.

Any organic solvent used in the art may be used for the organic solvent. For instance, propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, $\gamma$-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, or a combination thereof may be used.

Any lithium salt used in the art may be used for the lithium salt. For instance, $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (x and y are natural numbers), LiCl, LiI, or a combination thereof may be used.

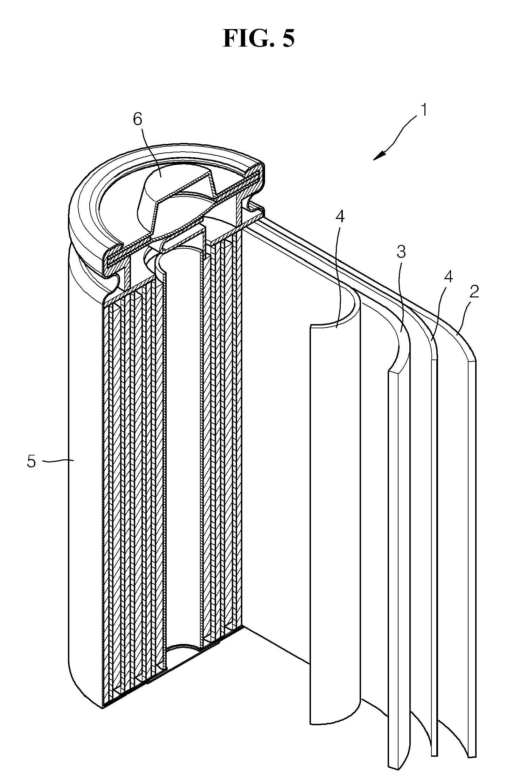

As illustrated in FIG. 5, a lithium battery 1 includes a cathode 3, an anode 2, and a separator 4. The above-described cathode 3, anode 2, and separator 4, as descried above, are wound or folded to be encased in a battery case 5. Thereafter, an organic electrolyte solution is injected into the battery case 5 and sealed by a cap assembly 6 for completing the lithium battery 1. The battery case 5 may have a cylindrical shape, a square shape, or a thin film shape. For instance, the battery 1 may be a large thin film type battery. The battery 1 may be a lithium-ion battery.

The separator 4 may be disposed between the cathode 3 and the anode 2 to form a battery structure. The battery structure is layered as a bicell structure and is impregnated in an organic electrolyte solution, and then an obtained structure is accommodated in a pouch and is sealed to complete a lithium-ion polymer battery.

Also, a plurality of the battery structures may be layered for forming a battery pack, and the battery pack may be used for any high-capacity and high-output devices. For instance, the battery pack may be used for a notebook computer, a smartphone, and an electric vehicle.

Also, since the lithium battery has excellent storage stability, life characteristics, and high rate characteristics under a high temperature, the lithium battery may be used in an electric vehicle (EV). For instance, the lithium battery may be used in a hybrid vehicle such as a plug-in hybrid electric vehicle (PHEV).

A method of manufacturing an electrode active material, according to the invention, includes preparing a resulting material obtained by contacting a core capable of occluding and emitting lithium with a spinel-structured lithium-free oxide or a precursor thereof; and firing the resulting material at a temperature ranging from 500°C to 1000°C for from 3 hours to 24 hours. The resulting material may include sediment or a mixture.

The precursor may include salt of two or more elements selected from a group consisting of metal and metalloid with an atomic weight of 9 or more. For instance, the salt may be one or more selected from acetate salt, chloride salt, nitrate salt, oxalate salt, and isopropoxide.

According to the foregoing method, the contact process may be performed in air or a solution. That is, the contact process may be a dry coating process or a wet coating process. For the wet coating process, methods such as coprecipitation and dipping, which are widely known in the art, may be used. For the dry coating process, methods such as milling and granulation, which are widely known in the art, may be used.

In the present specification, air is not limited and may be any kind of gas such as oxygen, nitrogen, argon, and the like.

For instance, the electrode active material may be manufactured by mixing a core and a lithium-free oxide or a precursor thereof in powder form in air or in a nitrogen atmosphere using a ball mill, and then by selectively firing the mixture. The term 'selectively' means that the firing process may be omitted.

For instance, the electrode active material may be manufactured by mixing a core and a lithium-free oxide or a precursor thereof in a solution, and then drying and selectively firing the mixture. A solvent of the solution may be an organic solvent or water; however, the solvent is not particularly limited thereto.

For instance, the electrode active material may be manufactured by impregnating the core in a solution which includes a precursor of an oxide, and then by removing and firing the core.

For instance, the electrode active material may be manufactured by coprecipitating the core and the precursor of an oxide in a solution including them, and then by removing and firing the coprecipitated material.

For instance, the electrode active material may be manufactured by mixing the core and the precursor of an oxide in a slurry state, and then drying and firing the mixture.

For instance, the firing process may be performing at a temperature ranging from about 700°C to about 950°C.

For instance, the firing process may be performed for about six to twenty-four hours. For instance, the firing process may be performed for about six to twelve hours. If the firing time is less than about one hour, the lithium-free oxide included in the surface treatment layer may not have a spinel structure.

According to the foregoing method, the firing process may be performed in an oxygen, air, or nitrogen atmosphere. For instance, the firing process may be performed in an air atmosphere.

The present disclosure will be described in detail through embodiments and comparative examples. Herein, the embodiments are just for exemplification of the present disclosure, and the present disclosure is not limited thereto.

(Manufacturing surface-treated OLO cathode active material)

Example 1

Tin chloride ($SnCl_2$) and magnesium nitrate ($Mg(NO_3)_2$ was mixed at a composition ratio of about 1:2, and then water was added to the mixture to manufacture a lithium-free oxide precursor slurry. $Li_{1.1}Ni_{0.35}Mn_{0.41}Co_{0.14}O_2$ having an average particle diameter of about 15 $\mu$m was added to and mixed with the lithium-free oxide precursor slurry. The mixture was fired at a temperature of about 850°C in an oxygen atmosphere for about twelve hours to manufacture a cathode active material including a $Li_{1.1}Ni_{0.35}Mn_{0.41}Co_{0.14}O_2$ core on a surface of which a surface treatment layer including $SnMg_2O_4$ is formed.
Content of the used lithium-free oxide precursor was about 3 wt% on a basis of a total weight of the lithium-free oxide precursor and $Li_{1.1}Ni_{0.35}Mn_{0.41}Co_{0.14}O_2$.

Example 2

A cathode active material was manufactured using the same method as in Example 1 except that $SnCl_2$ and zinc acetate ($Zn(O_2CCH_3)_2$) were used as a lithium-free oxide precursor for forming a surface treatment layer including $SnZn_2O_4$.

Example 3

A cathode active material was manufactured using the same method as in Example 1 except that $Mg(NO_3)_2$ and aluminum nitrate ($Al(NO_3)_3$) were used as a lithium-free oxide precursor for forming a surface treatment layer including $MgAl_2O_4$.

Example 4

A cathode active material was manufactured using the same method as in Example 1 except that copper chloride (CuCl) and $Al(NO_3)_3$ were used as a lithium-free oxide precursor for forming a surface treatment layer including $CuAl_2O_4$.

Example 5

A cathode active material was manufactured using the same method as in Example 1 except that $Zn(O_2CCH_3)_2$ and $Al(NO_3)_3$ were used as a lithium-free oxide precursor for forming a surface treatment layer including $ZnAl_2O_4$.

Example 6

A cathode active material was manufactured using the same method as in Example 1 except that nickel acetate ($Ni(O_2CCH_3)_2$) and $Al(NO_3)_3$ were used as a lithium-free oxide precursor for forming a surface treatment layer including $NiAl_2O_4$.

Examples 7-12

Cathode active materials having surface treatment layers were respectively manufactured using the same methods as in Examples 1 to 6 except that the lithium-free oxide precursor content was changed to about 1 wt%.

Examples 13-18

Cathode active materials having surface treatment layers were respectively manufactured using the same methods as in Examples 1 to 6 except that the lithium-free oxide precursor content was changed to about 5 wt%.

Examples 19-24

Cathode active materials having surface treatment layers were respectively manufactured using the same methods as in Example 1 except that the lithium-free oxide precursor content was changed to about 10 wt%.

Example 25 (coprecipitation method)

$SnCl_2$ and $Mg(NO_3)_2$ with a composition ratio of about 1:2 were added to water to prepare a first aqueous solution. $Li_{1.1}Ni_{0.35}Mn_{0.41}Co_{0.14}O_2$ having an average particle diameter of about 15 $\mu$m and LiOH were added to water to prepare a second aqueous solution. The first and second aqueous solutions were mixed for coprecipitating $Li_{1.1}Ni_{0.35}Mn_{0.41}CO_{0.14}O_2$ and a precursor of a lithium-free oxide and for obtaining sediment. The sediment was fired at a temperature of about 850°C in an oxygen atmosphere for about twelve hours to manufacture a cathode active material including a $Li_{1.1}Ni_{0.35}Mn_{0.41}Co_{0.14}O_2$ core on a surface of which a surface treatment layer including $SnMg_2O_4$ is formed.

Content of the used lithium-free oxide precursor was about 3 wt% on a basis of a total weight of the lithium-free oxide precursor and $Li_{1.1}Ni_{0.35}Mn_{0.41}Co_{0.14}O_2$.

Comparative Example 1

$Li_{1.1}Ni_{0.35}Mn_{0.41}Co_{0.14}O_2$ having an average particle diameter of about 15 $\mu$m was directly used as a cathode active material without manufacturing a surface treatment layer.

Comparative Example 2

A cathode active material was manufactured using the same method as in Example 1 except that a surface treatment layer including $Al_2O_3$ is formed using only $Al(NO_3)_3$.

Content of the used lithium-free oxide precursor was about 3 wt% on a basis of a total weight of the lithium-free oxide precursor and $Li_{1.1}Ni_{0.35}Mn_{0.41}Co_{0.14}O_2$.

Comparative Example 3

A cathode active material was manufactured using the same method as in Example 1 except that a surface treatment layer including MgO is formed using only $Mg(NO_3)_2$.

Content of the used lithium-free oxide precursor was about 3 wt% on a basis of a total weight of the lithium-free oxide precursor and $Li_{1.1}Ni_{0.35}Mn_{0.41}Co_{0.14}O_2$.

Comparative Example 4

A cathode active material was manufactured using the same method as in Example 3 except that a firing time is shortened to about fifteen minutes.

(Manufacturing surface-treated 5 V cathode active material)

Example 26

$SnCl_2$ and $Mg(NO_3)_2$ was mixed at a ratio of about 1:2, and then water was added to the mixture to manufacture a lithium-free oxide precursor slurry. $LiNi_{0.5}Mn_{1.5}O_4$ having an average particle diameter of about 15 $\mu$m was added to and mixed with the lithium-free oxide precursor slurry. The mixture was fired at a temperature of about 850°C in an oxygen atmosphere for about twelve hours to manufacture a cathode active material including a $LiNi_{0.5}Mn_{1.5}O_4$ core on a surface of which a surface treatment layer including $SnMg_2O_4$ is formed.

Content of the used lithium-free oxide precursor was about 3 wt% on a basis of a total weight of the lithium-free oxide precursor and $LiNi_{0.5}Mn_{1.5}O_4$.

Example 27

A cathode active material was manufactured using the same method as in Example 26 except that $SnCl_2$ and $Zn(O_2CCH_3)_2$ were used as a lithium-free oxide precursor for forming a surface treatment layer including $SnZn_2O_4$.

Example 28

A cathode active material was manufactured using the same method as in Example 26 except that $Mg(NO_3)_2$ and $Al(NO_3)_3$ were used as a lithium-free oxide precursor for forming a surface treatment layer including $MgAl_2O_4$.

Example 29

A cathode active material was manufactured using the same method as in Example 26 except that CuCl and $Al(NO_3)_3$ were used as a lithium-free oxide precursor for forming a surface treatment layer including $CuAl_2O_4$.

Example 30

A cathode active material was manufactured using the same method as in Example 26 except that $Zn(O_2CCH_3)_2$ and $Al(NO_3)_3$ were used as a lithium-free oxide precursor for forming a surface treatment layer including $ZnAl_2O_4$.

Example 31

A cathode active material was manufactured using the same method as in Example 26 except that $Ni(O_2CCH_3)_2$ and $Al(NO_3)_3$ were used as a lithium-free oxide precursor for forming a surface treatment layer including $NiAl_2O_4$.

Examples 32-37

Cathode active materials having surface treatment layers were respectively manufactured using the same methods as in Examples 26 to 31 except that the lithium-free oxide precursor content was changed to about 1 wt%.

Examples 38-43

Cathode active materials having surface treatment layers were respectively manufactured using the same methods as in Examples 26 to 31 except that the lithium-free oxide precursor content was changed to about 5 wt%.

Examples 44-49

Cathode active materials having surface treatment layers were respectively manufactured using the same methods as in Examples 25 to 30 except that the lithium-free oxide precursor content was changed to about 10 wt%.

Example 50 (coprecipitation method)

$SnC_2$ and $Mg(NO_3)_2$ with a composition ratio of about 1:2 were added to water to prepare a first aqueous solution. $LiNi_{0.5}Mn_{1.5}O_4$ having an average particle diameter of about 15 $\mu$m and LiOH were added to water to prepare a second aqueous solution. The first and second aqueous solutions were mixed for coprecipitating $LiNi_{0.5}Mn_{1.5}O_4$ and a precursor of a lithium-free oxide and for obtaining sediment. The sediment was fired at a temperature of about 850°C in an oxygen atmosphere for about twelve hours to manufacture $LiNi_{0.5}Mn_{1.5}O_4$ on a surface of which a surface treatment layer including $SnMg_2O_4$ is formed.
Content of the used lithium-free oxide precursor was about 3 wt% on a basis of a total weight of the lithium-free oxide precursor and $LiNi_{0.5}Mn_{1.5}O_4$.

Comparative Example 5

$LiNi_{0.5}Mn_{1.5}O_4$ having an average particle diameter of about 15 $\mu$m was directly used as a cathode active material without manufacturing a surface treatment layer.

Comparative Example 6

A cathode active material was manufactured using the same method as in Example 26 except that a surface treatment layer including $Al_2O_3$ is formed using only $Al(NO_3)_3$.
Content of the used lithium-free oxide precursor was about 3 wt% on a basis of a total weight of the lithium-free oxide precursor and $LiNi_{0.5}Mn_{1.5}O_4$.

Comparative Example 7

A cathode active material was manufactured using the same method as in Example 26 except that a surface treatment layer including MgO is formed using only $Mg(NO_3)_2$.
Content of the used lithium-free oxide precursor was about 3 wt% on a basis of a total weight of the lithium-free oxide precursor and $LiNi_{0.5}Mn_{1.5}O_4$.

(Manufacturing cathode)

Example 51

A cathode active material manufactured according to Example 1, a carbon conducting agent (Super P), and PVDF were mixed at a weight ratio of about 90:4:6, and then the mixture was mixed with NMP in an agate mortar to manufacture slurry. The slurry was applied on an aluminum current collector to a thickness of about 20 $\mu$m using a doctor blade, was dried at room temperature, and then was dried again under a vacuum condition and a temperature of about 120°C and was rolled to form a cathode plate on which a cathode active material layer is formed.

Examples 52-100

Cathode plates were manufactured using the same method as in Example 51 except that cathode active materials of Examples 2 to 50 are respectively used.

Reference Example 51-1 (forming surface treatment layer on electrode surface)

$Li_{1.1}Ni_{0.35}Mn_{0.41}Co_{0.14}O_2$ having an average particle diameter of about 15 $\mu$m, a Super P, and PVDF were mixed at a weight ratio of about 90:4:6, and then the mixture was mixed with NMP in an agate mortar to manufacture slurry. The slurry was applied on an aluminum current collector to a thickness of about 20 $\mu$m using a doctor blade, was dried at room temperature, and then was dried again under a vacuum condition and a temperature of about 120°C and was rolled to form a cathode plate on which a cathode active material layer is formed.

The cathode plate was impregnated in lithium-free oxide precursor slurry manufactured by mixing $SnCl_2$ and $Mg(NO_3)_2$ with a composition ratio of about 1:2 and then by adding water to the mixture for about six hours, and was taken out and fired at a temperature of about 850°C for about twelve hours to manufacture an electrode on a surface of which a surface treatment layer including $SnMg_2O_4$ is formed.

Comparative Examples 8-14

Cathode plates were manufactured using the same method as in Example 51 except that cathode active materials of Comparative Examples 1 to 7 are used.

(Manufacturing lithium battery)

Example 101

A coin cell was manufactured using a cathode plate manufactured according to Example 51, lithium metal as a counter electrode, and a solution, in which a PTFE separator and 1.0M $LiPF_6$ are dissolved by ethylene carbonate (EC) + dimethylene carbonate (DMC) (volume ratio of about 1:1), as an electrolyte.

Examples 102-150

Coin cells were manufactured using the same methods as in Example 101 except that cathode plates manufactured according to Examples 52 to 100 are respectively used.

Comparative Examples 15-21

Coin cells were manufactured using the same methods as in Example 101 except that cathode plates manufactured according to Comparative Examples 8 to 14 are respectively used.

Evaluation of Example 1: XRD experiment (1)

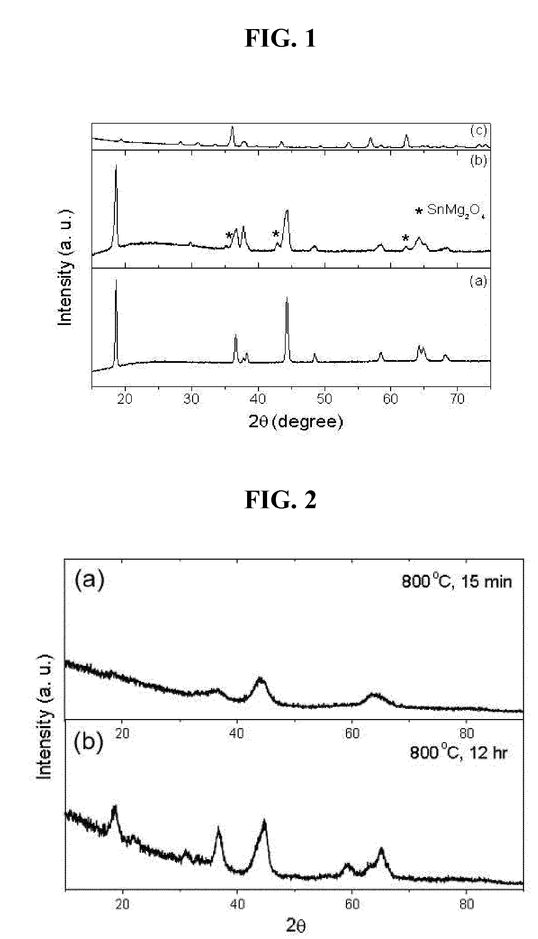

An X-ray diffraction (XRD) experiment was performed on each surface of cathode active materials manufactured according to Example 19 and the Comparative Example 1 and separately synthesized $SnMg_2O_4$, and a result thereof is illustrated in FIG. 1.

(a) of FIG. 1 illustrates a result of an XRD experiment on a cathode active material manufactured according to Comparative Example 1.

(b) of FIG. 1 illustrates a result of an XRD experiment on a cathode active material manufactured according to Example 19.

(c) of FIG. 1 illustrates a result of an XRD experiment on $SnMg_2O_4$ independently synthesized by firing lithium-free oxide precursor slurry, which is manufactured by mixing $SnCl_2$ and $Mg(NO_3)_2$ at a composition ratio of about 1:2 with water, at a temperature of about 850°C in an oxygen atmosphere for about twelve hours. This is a reference material.

As illustrated in (b) of FIG. 1, a characteristic peak corresponding to an $SnMg_2O_4$ spinel crystal structure formed on a surface of a cathode active material of Example 19 was shown; however, as illustrated in (a) of FIG. 1, this peak was not shown from Comparative Example 1.

Evaluation of Example 2: XRD experiment (2)

Lithium-free spinel oxides expected to be formed on surface of cathode active materials manufactured according to Example 3 and Comparative Example 4 were separately synthesized, and an XRD experiment was performed on the lithium-free spinel oxides. Results are illustrated in FIG. 2.

(a) of FIG. 2 illustrates a result of an XRD experiment on $MgAl_2O_4$ separately synthesized by firing lithium-free oxide precursor slurry, which is manufactured by mixing $Mg(NO_3)_2$ and $Al(NO_3)_3$ at a composition ratio of about 1:2 with water, at a temperature of about 800°C in an oxygen atmosphere for about fifteen minutes.

(b) of FIG. 2 illustrates a result of an XRD experiment on $MgAl_2O_4$ separately synthesized by firing lithium-free oxide precursor slurry, which is manufactured by mixing $Mg(NO_3)_2$ and $Al(NO_3)_3$ at a composition ratio of about 1:2 with water, at a temperature of about 800°C in an oxygen atmosphere for about twelve hours.

A characteristic peak corresponding to an $MgAl_2O_4$ spinel crystal structure is shown in (b) of FIG. 2; however, a characteristic peak corresponding to an $MgAl_2O_4$ spinel crystal structure is not shown in (a) of FIG. 2.

That is, it is confirmed that $MgAl_2O_4$ spinel-structured crystal may be synthesized when a firing process is performed at a temperature of about 800°C for more than about three hours. Therefore, it is determined that a surface treatment layer including $MgAl_2O_4$ crystal was not formed in Comparative Example 4.

Evaluation of Example 3: ion-coupled plasma (ICP) experiment

An ICP experiment was performed on a surface of a cathode active material manufactured according to Example 1.

A device for the ICP experiment was the model ICPS-8100 of Shimadzu Corporation. A composition ratio of Sn:Mg:O on the cathode active material surface was about 0.97:2.02:3.97.

Evaluation of Example 4: transmission electron microscope (TEM) experiment

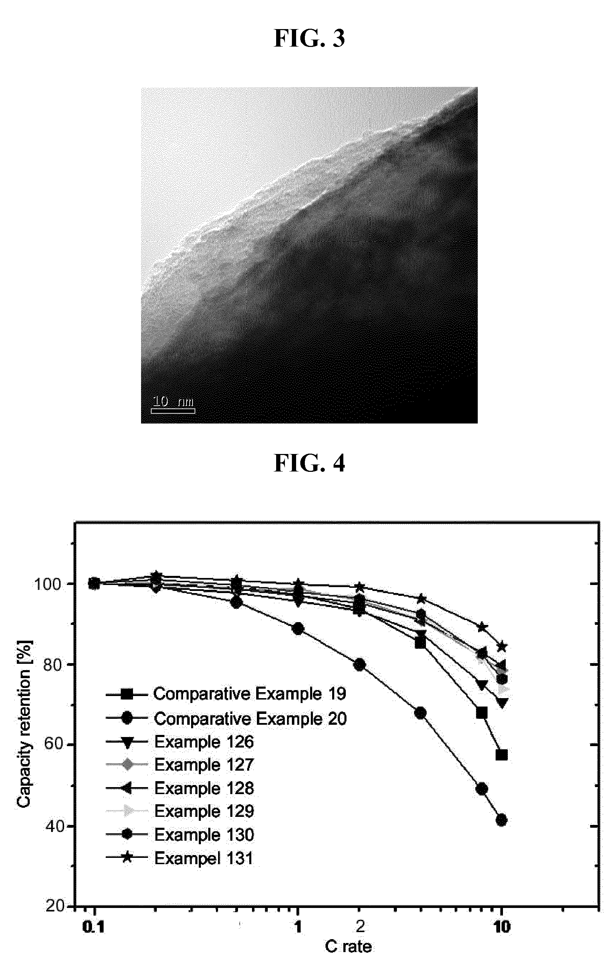

A TEM image of a surface of a cathode active material manufactured according to Example 1 was captured. A result is illustrated in FIG. 3. As illustrated in FIG. 3, a surface treatment layer was formed on a surface of an active material core. A thickness of the surface treatment layer was about 8 nm to about 12 nm.

Evaluation of Example 5: stability experiment at a high temperature of about 90°C

To coin cells manufactured according to Examples 101 to 106 and Comparative Examples 15 to 17, constant-current charge was performed until a voltage of about 4.45 V at a rate of about 0.05 C, and constant-current discharge was performed until a voltage of about 3.0 V at a rate of about 0.05 C in a first cycle. In a second cycle, constant-current charge was performed until a voltage of about 4.45 V at a rate of about 0.1 C, and then constant-voltage charge was performed until a current becomes about 0.05 C maintaining a voltage of about 4.45 V and constant-current discharge was performed until a voltage of about 3.0 V at a rate of about 0.1 C. In a third cycle, constant-current charge was performed until a voltage of about 4.45 V at a rate of about 0.5 C, and then constant-voltage charge was performed until a current becomes about 0.05 C maintaining a voltage of about 4.45 V and constant-current discharge was performed until a voltage of about 3.0 V at a rate of about 0.2 C. In the third cycle, discharge capacity was considered as standard capacity.

In a fourth cycle, a charging operation was performed until a voltage of about 4.45 V at a rate of about 0.5 C, and then constant-voltage charge was performed until a current arrives as about 0.05 C maintaining a voltage of about 4.45 V. Thereafter, the charged batteries were stored in an oven at a temperature of about 90°C for about four hours, and then were removed to be discharged until a voltage of about 3.0 V at a rate of about 0.2 C. Results of the charging and discharging operations are shown in Table 1 below. A capacity retention ratio after high temperature storage is defined as expressed in the following Equation 1.

<Equation 1>

Capacity retention ratio after high temperature storage [%] = discharge capacity after high temperature storage in a fourth cycle /standard capacity ×100 (standard cycle is a discharge capacity in a third cycle)

Evaluation of Example 6: stability experiment at a high temperature of about 60°C

The stability experiment was performed on coin cells manufactured according to Examples 101 to 106 and Comparative Examples 15 to 17 using the same method as in Evaluation of Example 5 except that the charged batteries were stored in an oven at a temperature of about 60°C for about seven days. Results of the charging and discharging operations are shown in Table 1 below. A capacity retention ratio after high temperature storage is defined as expressed in Equation 1 above.

<Table 1>

|  | Capacity retention ratio after storage at 90°C for 4 hours [%] | Capacity retention ratio after storage at 60°C for 7 days [%] |
|---|---|---|
| Comparative Example 15 | 90.4 | 89.0 |
| Comparative Example 16 | 91.2 | 89.6 |
| Comparative Example 17 | 90.2 | 90.2 |
| Example 101 | 98.1 | 86.9 |
| Example 102 | 97.4 | 94.6 |
| Example 103 | 99.8 | 97.9 |
| Example 104 | 98.4 | 95.9 |
| Example 105 | 98.5 | 96.5 |
| Example 106 | 99.2 | 100.2 |

As shown in Table 1, capacity retention ratios after high temperature storage of the lithium batteries of Examples 101 to 106 were generally improved in comparison with the lithium batteries of Comparative Examples 15 to 17.

Evaluation of Example 7: high temperature charge/discharge experiment

Coin cells manufactured according to Examples 101 and 103 to 106 and Comparative Example 15 were charged/discharged fifty times with a constant current of about 1 C rate in the voltage range of about 3.0 V to about 4.45 V in comparison with lithium metal at a high temperature of about 45°C. Life characteristics in a 50th cycle are shown in Table 2 below. A capacity retention ratio in a 50th cycle is calculated from the following Equation 2.

<Equation 2>

Capacity retention ratio in 50th cycle [%] = discharge capacity in 50th cycle/discharge capacity in 1st cycle ×100

<Table 2>

| | Retention ratio in 50th cycle [%] |
|---|---|
| Comparative Example 15 | 90.2 |
| Example 101 | 92.5 |
| Example 103 | 97.1 |
| Example 104 | 96.9 |
| Example 105 | 97.7 |
| Example 106 | 94.5 |

As shown in Table 2, the lithium batteries of Examples 101 and 103 to 106 showed improved high temperature life characteristics in comparison with the lithium battery of Comparative Example 15.

Evaluation of Example 6: high rate characteristics experiment

Coin cells manufactured according to Examples 126 to 131 and Comparative Examples 19 and 20 were charged with a constant current of about 1 C rate in the voltage range of about 3.0 V to about 4.45 V in comparison with lithium metal at room temperature, and a capacity retention ratio according to increased current density is shown in FIG. 4. Current densities during discharge were about 0.1 C, 0.2 C, 0.5 C, 1 C, 2 C, 5 C, and 10 C rate. In FIG. 4, a capacity retention is calculated from the following Equation 3.

<Equation 3>

Capacity retention ratio for each rate [%] = discharge capacity for each rate/discharge capacity at 0.1 C ×100

As shown in FIG. 4, high rate characteristics of the lithium batteries of Examples 126 to 131 were improved in comparison with the lithium batteries of Comparative Examples 19 and 20.
As described above, according to the one or more of the above Examples of the present invention, since a core capable of occluding and emitting lithium is surface-treated with a spinel-structured lithium-free oxide, high temperature stability, high temperature life characteristics, and high rate characteristics of a lithium battery may be improved.
It should be understood that the exemplary embodiments described therein should be considered in a descriptive sense only and not for purposes of limitation. Descriptions of features or aspects within each embodiment should typically be considered as available for other similar features or aspects in other embodiments.

Claims

1.  An electrode active material, comprising:

    a core capable of occluding and emitting lithium, said core comprising a cathode active material or an anode active material; and
    a surface treatment layer formed on at least a portion of a surface of the core, wherein the surface treatment layer comprises a lithium-free oxide having a spinel structure,
    wherein the lithium-free oxide content is larger than 0wt% and less than 10wt% on a basis of a total weight of electrode active material, and
    wherein the lithium-free oxide is expressed as Chemical formula 1 below

    <Chemical formula 1>          $AB_2O_4$,

where A is one or more selected from a group consisting of tin (Sn), magnesium (Mg), molybdenum (Mo), copper (Cu), zinc (Zn), titanium (Ti), nickel (Ni), calcium (Ca), iron (Fe), vanadium (V), lead (Pb), cobalt (Co), germanium (Ge), cadmium (Cd), mercury (Hg), strontium (Sr), manganese (Mn), aluminum (Al), tungsten (W), and beryllium (Be); B is one or more selected from a group consisting of Mg, Zn, Al, V, Mn, gallium (Ga), chromium (Cr), Fe, rhodium (Rh), Ni, indium (In), Co, and Mn; and A is different from B, and **characterized in that** a ratio of a peak intensity of a (111) crystal face to a peak intensity of a (311) crystal face, I(111)/I(311), of the lithium-free oxide having a spinel structure is more than 0.3.

2. The electrode active material of claim 1, wherein the lithium-free oxide is one or more selected from a group consisting of $SnMg_2O_4$, $SnZn_2O_4$, $MgAl_2O_4$, $MoAl_2O_4$, $CuAl_2O_4$, $ZnAl_2O_4$, $ZnV_2O_4$, $TiMn_2O_4$, $ZnMn_2O_4$, $NiAl_2O_4$, $MgGa_2O_4$, $ZnGa_2O_4$, $CaGa_2O_4$, $TiMg_2O_4$, $VMg_2O_4$, $MgV_2O_4$, $FeV_2O_4$, $ZnV_2O_4$, $MgCr_2O_4$, $MnCr_2O_4$, $FeCr_2O_4$, $CoCr_2O_4$, $NiCr_2O_4$, $CuCr_2O_4$, $ZnCr_2O_4$, $CdCr_2O_4$, $TiMn_2O_4$, $ZnMn_2O_4$, $MgFe_2O_4$, $TiFe_2O_4$, $MnFe_2O_4$, $CoFe_2O_4$, $NiFe_2O_4$, $CuFe_2O_4$, $ZnFe_2O_4$, $CdFe_2O_4$, $AlFe_2O_4$, $PbFe_2O_4$, $MgCo_2O_4$, $TiCo_2O_4$, $ZnCo_2O_4$, $SnCo_2O_4$, $FeNi_2O_4$, $GeNi_2O_4$, $MgRh_2O_4$, $ZnRh_2O_4$, $TiZn_2O_4$, $SrAl_2O_4$, $CrAl_2O_4$, $MoAl_2O_4$, $FeAl_2O_4$, $CoAl_2O_4$, $MgGa_2O_4$, $ZnGa_2O_4$, $MgIn_2O_4$, $CaIn_2O_4$, $FeIn_2O_4$, $CoIn_2O_4$, $NiIn_2O_4$, $CdIn_2O_4$, and $HgIn_2O_4$.

3. The electrode active material of claim 1, wherein the lithium-free oxide comprises two or more elements selected from a group consisting of metal and metalloid with an atomic weight of 9 or more.

4. The electrode active material of claim 3, wherein the elements are selected from a group consisting of Sn, Mg, Mo, Cu, Zn, Ti, Ni, Ca, Al, V, Mn, Ga, Fe, Cr, Rh, In, Pb, Co, Ge, Cd, Hg, Sr, W and Be.

5. The electrode active material of claim 3 or 4, wherein a composition ratio of oxygen to two or more elements selected from a group consisting of metal and metalloid with an atomic weight of 9 or more is about 4:2.1 to about 4:3.9 in the lithium-free oxide.

6. The electrode active material of any of claims 1-5, wherein the core comprises one or more selected from a group consisting of lithium metal, a metal which is alloyable with lithium, a lithium transition metal oxide, a transition metal oxide, a non-transition metal oxide, and carbon material.

7. The electrode active material of claim 1 or 6, wherein the core comprises compounds expressed as the following Chemical formulas 1 and 2,

<Chemical formula 1>    $Li[Li_aMe_{1-a}]O_{2+d}$

<Chemical formula 2>    $Li[Li_bMe_cM'_e]O_{2+d}$

where $0 < a < 1$, $b + c + e = 1$; $0 < b < 1$, $0 < e < 0.1$; $0 \leq d \leq 0.1$, Me is one or more metals selected from a group consisting of Ti, V, Cr, Mn, Fe, Co, Ni, Cu, Al, Mg, Zr, and B, and M' is one or more metals selected from a group consisting of Mo, W, Ir, Ni, and Mg.

8. The electrode active material of claim 1 or 6, wherein the core comprises compounds expressed as the following Chemical formulas 3 to 7.

&lt;Chemical formula 3&gt;    $Li_xco_{1-y}M_yO_{2-\alpha}X_\alpha$

&lt;Chemical formula 4&gt;    $Li_xCo_{1-y-z}Ni_yM_zO_{2-\alpha}X_\alpha$

&lt;Chemical formula 5&gt;    $Li_xMn_{2-y}M_yO_{4-\alpha}X_\alpha$

&lt;Chemical formula 6&gt;    $Li_xCo_{2-y}M_yO_{4-\alpha}X_\alpha$

&lt;Chemical formula 7&gt;    $Li_xMe_yM_zPO_{4-\alpha}X_\alpha$,

where $0.90 \leq x \leq 1.1$, $0 \leq y \leq 0.9$, $0 \leq z \leq 0.5$, $1-y-z > 0$, $0 \leq \alpha \leq 2$, Me is one or more metals selected from a group consisting of Ti, V, Cr, Mn, Fe, Co, Ni, Cu, Al, Mg, Zr, and B, M is one or more elements selected from a group consisting of Mg, Ca, Sr, Ba, Ti, Zr, Nb, Mo, W, Zn, Al, Si, Ni, Mn, Cr, Fe, Mg, Sr, V, and rare-earth elements, and X is an element selected from a group consisting of O, F, S, and P.

9. The electrode active material of claim 1 or 6, wherein the core comprises compounds expressed as the following Chemical formulas 8 and 9:

<Chemical formula 8>     $pLi_2MO_3-(1-p)LiMeO_2$

<Chemical formula 9>     $xLi_2MO_{3-y}LiMeO_{2-z}Li_{1+d}M'_{2-d}O_4$,

where $0 < p < 1$, $x + y + z = 1$; $0 < x < 1$, $0 < y < 1$, $0 < z < 1$; $0 \leq d \leq 0.33$, M is one or more elements selected from a group consisting of Mg, Ca, Sr, Ba, Ti, Zr, Nb, Mo, W, Zn, Al, Si, Ni, Mn, Cr, Fe, Mg, Sr, V, and rare-earth elements, Me is one or more metals selected from a group consisting of Ti, V, Cr, Mn, Fe, Co, Ni, Cu, Al, Mg, Zr, and B, M' is one or more metals selected from a group consisting of Ti, V, Cr, Mn, Fe, Co, Ni, Cu, Al, Mg, Zr, and B.

10. The electrode active material of claim 1 or 6, wherein the core comprise one or more selected from a group consisting of Si, Sn, Al, Ge, Pb, Bi, Sb, Si-Y alloy, Sn-Y1 alloy, lithium titanium oxide, vanadium oxide, lithium vanadium oxide, $SnO_2$, $SiO_x$ ($0<x<2$), natural graphite, artificial graphite, soft carbon, hard carbon, mesophase pitch carbide, and fired coke, wherein Y1 is Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

11. An electrode comprising an electrode active material according to any one of claims 1 to 10.

12. A lithium battery comprising an electrode according to claim 11.

13. A method of manufacturing an electrode active material according to any of claims 1-10, comprising:

preparing a resulting material obtained by contacting a core comprising a cathode active material or an anode active material with a spinel-structured lithium-free oxide or a precursor thereof; and
firing the resulting material at a temperature ranging from 500 °C to 1000 °C for from 3 hours to 24 hours.

14. The method of claim 13, wherein the precursor comprises salt of two or more elements selected from a group consisting of metal and metalloid with an atomic weight of 9 or more, wherein the salt is one or more selected from a group consisting of acetate salt, chloride salt, nitrate salt, oxalate salt, and isopropoxide.

15. An electrode active material, comprising:

a core capable of occluding and emitting lithium; and
a surface treatment layer formed on at least a portion of a surface of the core, wherein:

the surface treatment layer comprises a lithium-free oxide having a spinel structure,
the lithium-free oxide content is larger than 0wt% and less than 10wt% on a basis of a total weight of electrode active material; and
the core comprises compounds expressed as the following Chemical formulas 8 and 9:

<Chemical formula 8>     $pLi_2MO_3-(1-p)LiMeO_2$

<Chemical formula 9>     $xLi_2MO_3 - yLiMeO_2 - zLi_{1+d}M'_{2-d}O_4$,

where $0 < p < 1$; $x + y + z = 1$; $0 < x < 1$; $0 < y < 1$; $0 < z < 1$; $0 \leq d \leq 0.33$; M is one or more elements selected from a group consisting of Mg, Ca, Sr, Ba, Ti, Zr, Nb, Mo, W, Zn, Al, Si, Ni, Mn, Cr, Fe, Mg, Sr, V, and rare-earth elements; Me is one or more metals selected from a group consisting of Ti, V, Cr, Mn, Fe, Co, Ni, Cu, Al, Mg, Zr, and B; M' is one or more metals selected from a group consisting of Ti, V, Cr, Mn, Fe, Co, Ni, Cu, Al, Mg, Zr, and B, and **characterized in that** a ratio of a peak intensity of a (111) crystal face to a peak intensity of a (311) crystal face, I(111)/I(311), of the lithium-free oxide having a spinel structure is more than 0.3.

**EP 2 521 211 B1**

**Patentansprüche**

1.  Aktives Elektrodenmaterial, umfassend:

    einen Kern, der Lithium verdecken und emittieren kann, wobei der Kern ein aktives Kathodenmaterial oder ein aktives Anodenmaterial umfasst; und
    eine Oberflächenbehandlungsschicht, die auf wenigstens einem Teil einer Oberfläche des Kerns ausgebildet ist, wobei die Oberflächenbehandlungsschicht ein lithiumfreies Oxid mit einer Spinellstruktur umfasst;
    wobei der lithiumfreie Oxidanteil größer ist als 0 Gew.-% und kleiner als 10 Gew.-% auf der Basis eines Gesamtgewichts des aktiven Elektrodenmaterials; und
    wobei das lithiumfreie Oxid als die folgende chemische Formel 1 ausgedrückt ist:

    <center><chemische Formel 1>        $AB_2O_4$,</center>

    wobei A ein oder mehrere Stoffe ist, die ausgewählt sind aus der Gruppe bestehend aus Zinn (Sn), Magnesium (Mg), Molybdän (Mo), Kupfer (Cu), Zink (Zn), Titan (Ti), Nickel (Ni), Calcium (Ca), Eisen (Fe), Vanadium (V), Blei (Pb), Cobalt (Co), Germanium (Ge), Cadmium (Cd), Quecksilber (Hg), Strontium (Sr), Mangan (Mn), Aluminium (Al), Wolfram (W) und Beryllium (B); wobei B ein oder mehrere Stoffe ist, die ausgewählt sind aus der Gruppe bestehend aus Mg, Zn, Al, V, Mn, Gallium (Ga), Chrom (Cr), Fe, Rhodium (Rh), Ni, Indium (In), Co und Mn; und wobei A und B unterschiedlich sind; und **dadurch gekennzeichnet, dass** ein Verhältnis einer Spitzenintensität einer (111) Kristallfläche zu einer Spitzenintensität einer (311) Kristallfläche I(111)/I(311) des lithiumfreien Oxids mit einer Spinellstruktur größer ist als 0,3.

2.  Aktives Elektrodenmaterial nach Anspruch 1, wobei das lithiumfreie Oxid ein oder mehrere Stoffe ist, die ausgewählt sind aus der Gruppe bestehend aus $SnMg_2O_4$, $SnZn_2O_4$, $MgAl_2O_4$, $MoAl_2O_4$, $CuAl_2O_4$, $ZnAl_2O_4$, $ZnV_2O_4$, $TiMn_2O_4$, $ZnMn_2O_4$, $NiAl_2O_4$, $MgGa_2O_4$, $ZnGa_2O_4$, $CaGa_2O_4$, $TiMg_2O_4$, $VMg_2O_4$, $MgV_2O_4$, $FeV_2O_4$, $ZnV_2O_4$, $MgCr_2O_4$, $MnCr_2O_4$, $FeCr_2O_4$, $CoCr_2O_4$, $NiCr_2O_4$, $CuCr_2O_4$, $ZnCr_2O_4$, $CdCr_2O_4$, $TiMn_2O_4$, $ZnMn_2O_4$, $MgFe_2O_4$, $TiFe_2O_4$, $MnFe_2O_4$, $CoFe_2O_4$, $NiFe_2O_4$, $CuFe_2O_4$, $ZnFe_2O_4$, $CdFe_2O_4$, $AlFe_2O_4$, $PbFe_2O_4$, $MgCo_2O_4$, $TiCo_2O_4$, $ZnCo_2O_4$, $SnCo_2O_4$, $FeNi_2O_4$, $GeNi_2O_4$, $MgRh_2O_4$, $ZnRh_2O_4$, $TiZn_2O_4$, $SrAl_2O_4$, $CrAl_2O_4$, $MoAl_2O_4$, $FeAl_2O_4$, $CoAl_2O_4$, $MgGa_2O_4$, $ZnGa_2O_4$, $MgIn_2O_4$, $CaIn_2O_4$, $FeIn_2O_4$, $CoIn_2O_4$, $NiIn_2O_4$, $CdIn_2O_4$ und $HgIn_2O_4$.

3.  Aktives Elektrodenmaterial nach Anspruch 1, wobei das lithiumfreie Oxid zwei oder mehr Elemente umfasst, die ausgewählt sind aus der Gruppe bestehend aus Metall und Metalloid mit einem Atomgewicht von 9 oder mehr.

4.  Aktives Elektrodenmaterial nach Anspruch 3, wobei die Elemente ausgewählt sind aus der Gruppe bestehend aus Sn, Mg, Mo, Cu, Zn, Ti, Ni, Ca, Al, V, Mn, Ga, Fe, Cr, Rh, In, Pb, Co, Ge, Cd, Hg, Sr, W und Be.

5.  Aktives Elektrodenmaterial nach Anspruch 3 oder 4, wobei ein Zusammensetzungsverhältnis von Sauerstoff zu zwei oder mehr Elementen, die ausgewählt sind aus einer Gruppe bestehend aus Metall und Metalloid mit einem Atomgewicht von 9 oder mehr etwa 4:2,1 bis etwa 4:3,9 in dem lithiumfreien Oxid liegt.

6.  Aktives Elektrodenmaterial nach einem der Ansprüche 1 bis 5, wobei der Kern einen oder mehrere Stoffe umfasst, die ausgewählt sind aus einer Gruppe bestehend aus Lithiummetall, einem Metall, das mit Lithium legierbar ist, einem Lithiumübergangsmetalloxid, einem Übergangsmetalloxid, einem Nicht-Übergangsmetalloxid und Kohlenstoff.

7.  Aktives Elektrodenmaterial nach einem der Ansprüche 1 bis 6, wobei der Kern Verbindungen umfasst, die als die folgenden chemischen Formeln 1 und 2 ausgedrückt sind:

    <center><chemische Formel 1>        $Li[Li_aMe_{1-a}]O_{2+d}$</center>

    <center><chemische Formel 2>        $Li[Li_bMe_cM'_e]O_{2+d}$,</center>

    wobei $0 < a < 1$, $b + c + e = 1$; $0 < b < 1{,}0$, $0 < e < 0{,}1$; $0 \leq d \leq 0{,}1$, wobei Me ein oder mehrere Metalle ist, ausgewählt aus der Gruppe bestehend aus Ti, V, Cr, Mn, Fe, Co, Ni, Cu, Al, Mg, Zr und B, und wobei M' ein oder mehrere Metalle ist, ausgewählt aus der Gruppe bestehend aus Mo, W, Ir, Ni und Mg.

8.  Aktives Elektrodenmaterial nach einem der Ansprüche 1 bis 6, wobei der Kern Verbindungen umfasst, die als die folgenden chemischen Formeln 3 bis 7 ausgedrückt sind:

<chemische Formel 3>$\quad\quad$ $Li_xCo_{1-y}M_yO_{2-\alpha}X_\alpha$

<chemische Formel 4>$\quad\quad$ $Li_xCo_{1-y-z}Ni_yM_zO_{2-\alpha}X_\alpha$

<chemische Formel 5>$\quad\quad$ $L_ixMn_{2-y}M_yO_{4-\alpha}X_\alpha$

<chemische Formel 6>$\quad\quad$ $Li_xCo_{2-y}M_yO_{4-\alpha}X_\alpha$

<chemische Formel 7>$\quad\quad$ $Li_xMe_yM_zPO_{4-\alpha}X_\alpha$,

wobei $0,90 \leq x \leq 1,1$, $0 \leq y \leq 0,9$, $0 \leq z \leq 0,5$, $1-y-z> 0$, $0 \leq \alpha \leq 2$, wobei Me in oder mehrere Metalle ist, ausgewählt aus der Gruppe bestehend aus Ti, V, Cr, Mn, Fe, Co, Ni, Cu, Al, Mg, Zr und B, wobei M eines oder mehrere Elemente ist, ausgewählt aus der Gruppe bestehend aus Mg, Ca, Sr, Ba, Ti, Zr, Nb, Mo, W, Zn, Al, Si, Ni, Mn, Cr, Fe, Mg, Sr, V und Seltenerdelementen, und wobei X ein Element ist, das ausgewählt ist aus der Gruppe bestehend aus O, F, S und P.

9. Aktives Elektrodenmaterial nach einem der Ansprüche 1 bis 6, wobei der Kern Verbindungen umfasst, die als die folgenden chemischen Formeln 8 und 9 ausgedrückt sind:

<chemische Formel 8>$\quad\quad$ $pLi_2MO_3$-$(1-p)LiMeO_2$

<chemische Formel 9>$\quad\quad$ $xLi_2MO_{3-y}LiMeO_2$-$zLi_{1+d}M'_{2-d}O_4$,

wobei $0 < p < 1$, $x + y + z = 1$; $0 < x < 1, 0 < y < 1, 0 < z < 1,0$; $0 \leq d \leq 0,33$, wobei M eines oder mehrere Elemente ist, ausgewählt aus der Gruppe bestehend aus Mg, Ca, Sr, Ba, Ti, Zr, Nb, Mo, W, Zn, Al, Si, Ni, Mn, Cr, Fe, Mg, Sr, V und Seltenerdelementen, wobei Me ein oder mehrere Metalle ist, ausgewählt aus der Gruppe bestehend aus Ti, V, Cr, Mn, Fe, Co, Ni, Cu, Al, Mg, Zr und B, wobei M' ein oder mehrere Metalle ist, ausgewählt aus der Gruppe bestehend aus Ti, V, Cr, Mn, Fe, Co, Ni, Cu, Al, Mg, Zr und B.

10. Aktives Elektrodenmaterial nach einem der Ansprüche 1 bis 6, wobei der Kern einen oder mehrere Stoffe umfasst, ausgewählt aus der Gruppe bestehend aus Si, Sn, Al, Ge, Pb, Bi, Sb, Si-Y-Legierung, Sn-Y1-Legierung, Lithiumtitanoxid, Vanadiumoxid, Lithiumvanadiumoxid, $SnO_2$, $SiO_x$ (0<x<2), natürlichem Graphit, künstlichem Graphit, weichem Kohlenstoff, hartem Kohlenstoff, Mesophasenpechkarbid und befeuertem Koks, wobei Y1 Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po oder eine Kombination davon ist.

11. Elektrode, umfassend ein aktives Elektrodenmaterial nach einem der Ansprüche 1 bis 10.

12. Lithiumbatterie, umfassend eine Elektrode nach Anspruch 11.

13. Verfahren zur Herstellung eines aktiven Elektrodenmaterials nach einem der Ansprüche 1 bis 10, umfassend:

Erzeugen eines resultierenden Materials, das erhalten wird durch Inkontaktbringen eines Kerns, der ein aktives Kathodenmaterial oder ein aktives Anodenmaterial umfasst, mit einem lithiumfreien Oxid mit Spinellstruktur oder einem Vorläufer davon; und
Befeuern des resultierenden Materials auf einer Temperatur zwischen 500 °C und 1000 °C über 3 Stunden bis 24 Stunden.

14. Verfahren nach Anspruch 13, wobei der Vorläufer Salz von zwei oder mehr Elementen umfasst, die ausgewählt sind aus einer Gruppe bestehend aus Metall und Metalloid mit einem Atomgewicht von 9 oder mehr, wobei das Salz ein Salz oder mehrere Salze ist, ausgewählt aus einer Gruppe bestehend aus Acetatsalz, Chloridsalz, Nitratsalz, Oxalatsalz und Isopropoxid.

15. Aktives Elektrodenmaterial, umfassend:

einen Kern, der Lithium verdecken und emittieren kann; und

eine Oberflächenbehandlungsschicht, die auf wenigstens einem Teil einer Oberfläche des Kerns ausgebildet ist, wobei:

wobei die Oberflächenbehandlungsschicht ein lithiumfreies Oxid mit einer Spinellstruktur umfasst;
wobei der lithiumfreie Oxidanteil größer ist als 0 Gew.-% und kleiner als 10 Gew.-% auf der Basis eines Gesamtgewichts des aktiven Elektrodenmaterials; und
wobei der Kern Verbindungen umfasst, die als die folgenden chemischen Formeln 8 und 9 ausgedrückt sind:

<chemische Formel 8>    $pLi_2MO_3-(1-p)LiMeO_2$

<chemische Formel 9>    $xLi_2MO_{3-y}LiMeO_2-zLi_{i+d}M'_{2-d}O_4$,

wobei $0 < p < 1$, $x + y + z = 1$; $0 < x < 1,0 < y < 1,0 < z < 1,0$; $0 \leq d \leq 0,33$, wobei M eines oder mehrere Elemente ist, ausgewählt aus der Gruppe bestehend aus Mg, Ca, Sr, Ba, Ti, Zr, Nb, Mo, W, Zn, Al, Si, Ni, Mn, Cr, Fe, Mg, Sr, V und Seltenerdelementen, wobei Me ein oder mehrere Metalle ist, ausgewählt aus der Gruppe bestehend aus Ti, V, Cr, Mn, Fe, Co, Ni, Cu, Al, Mg, Zr und B, wobei M' ein oder mehrere Metalle ist, ausgewählt aus der Gruppe bestehend aus Ti, V, Cr, Mn, Fe, Co, Ni, Cu, Al, Mg, Zr und B; und **dadurch gekennzeichnet, dass** ein Verhältnis einer Spitzenintensität einer (111) Kristallfläche zu einer Spitzenintensität einer (311) Kristallfläche I(111)/I(311) des lithiumfreien Oxids mit einer Spinellstruktur größer ist als 0,3.

## Revendications

**1.** Matériau actif d'électrode, comprenant :

un noyau capable d'occlure et d'émettre du lithium, ledit noyau comprenant un matériau actif de cathode ou un matériau actif d'anode ; et
une couche de traitement de surface formée sur au moins une partie d'une surface du noyau,
dans lequel la couche de traitement de surface comprend un oxyde libre de lithium ayant une structure de spinelle,
dans lequel la quantité d'oxyde libre de lithium est supérieure à 0% en poids et inférieure à 10% en poids sur une base d'un poids total de matériau actif d'électrode, et
dans lequel l'oxyde libre de lithium est exprimé en tant que la Formule chimique 1 ci-dessous

<Formule chimique 1>    $AB_2O_4$,

où A représente un ou plusieurs choisis dans le groupe constitué de l'étain (Sn), du magnésium (Mg), du molybdène (Mo), du cuivre (Cu), du zinc (Zn), du titane (Ti), du nickel (Ni), du calcium (Ca), du fer (Fe), du vanadium (V), du plomb (Pb), du cobalt (Co), du germanium (Ge), du cadmium (Cd), du mercure (Hg), du strontium (Sr), du manganèse (Mn), de l'aluminium (Al), du tungstène (W) et du béryllium (Be) ; B représente un ou plusieurs éléments choisis parmi un groupe constitué du Mg, du Zn, de l'Al, du V, du Mn, du gallium (Ga), du chrome (Cr), du Fe, du rhodium (Rh), du Ni, de l'indium (In), du Co et du Mn ; et A est différent de B, et **caractérisé en ce qu'**un rapport d'une intensité de pic d'une face cristalline (111) à une intensité de pic d'une face cristalline (311), I(111) / I(311), de l'oxyde libre de lithium ayant une structure de spinelle est supérieur à 0,3.

**2.** Matériau actif d'électrode selon la revendication 1, dans lequel l'oxyde libre de lithium est un ou plusieurs choisis parmi un groupe constitué de $SnMg_2O_4$, $SnZn_2O_4$, $MgAl_2O_4$, $MoAl_2O_4$, $CuAl_2O_4$, $ZnAl_2O_4$, $ZnV_2O_4$, $TiMn_2O_4$, $ZnMn_2O_4$, $NiAl_2O_4$, $MgGa_2O_4$, $ZnGa_2O_4$, $CaGa_2O_4$, $TiMg_2O_4$, $VMg_2O_4$, $MgV_2O_4$, $FeV_2O_4$, $ZnV_2O_4$, $MgCr_2O_4$, $MnCr_2O_4$, $FeCr_2O_4$, $CoCr_2O_4$, $NiCr_2O_4$, $CuCr_2O_4$, $ZnCr_2O_4$, $CdCr_2O_4$, $TiMn_2O_4$, $ZnMn_2O_4$, $MgFe_2O_4$, $TiFe_2O_4$, $MnFe_2O_4$, $CoFe_2O_4$, $NiFe_2O_4$, $CuFe_2O_4$, $ZnFe_2O_4$, $CdFe_2O_4$, $AlFe_2O_4$, $PbFe_2O_4$, $MgCo_2O_4$, $TiCo_2O_4$, $ZnCo_2O_4$, $SnCo_2O_4$, $FeNi_2O_4$, $GeNi_2O_4$, $MgRh_2O_4$, $ZnRh_2O_4$, $TiZn_2O_4$, $SrAl_2O_4$, $CrAl_2O_4$, $MoAl_2O_4$, $FeAl_2O_4$, $CoAl_2O_4$, $MgGa_2O_4$, $ZnGa_2O_4$, $MgIn_2O_4$, $CaIn_2O_4$, $FeIn_2O_4$, $CoIn_2O_4$, $NiIn_2O_4$, $CdIn_2O_4$ et $HgIn_2O_4$.

**3.** Matériau actif d'électrode selon la revendication 1, dans lequel l'oxyde libre de lithium comprend deux ou plusieurs éléments choisis parmi un groupe constitué de métal et de métalloïde avec un poids atomique de 9 ou plus.

**4.** Matériau actif d'électrode selon la revendication 3, dans lequel les éléments sont choisis parmi un groupe constitué de Sn, Mg, Mo, Cu, Zn, Ti, Ni, Ca, Al, V, Mn, Ga, Fe, Cr, Rh, In, Pb, Co, Ge, Cd, Hg, Sr, W et Be.

**5.** Matériau actif d'électrode selon la revendication 3 ou 4, dans lequel un rapport de composition de l'oxygène à deux ou plusieurs éléments choisis parmi un groupe constitué de métal et de métalloïde avec un poids atomique de 9 ou plus est d'environ 4 : 2,1 à environ 4 : 3,9 dans l'oxyde libre de lithium.

**6.** Matériau actif d'électrode de l'une quelconque des revendications 1-5, dans lequel le noyau comprend un ou plusieurs éléments choisis parmi un groupe constitué du lithium métallique, d'un métal qui est alliable avec le lithium, d'un oxyde de métal de transition de lithium, d'un oxyde de métal de transition, d'un oxyde de métal de non-transition et d'un matériau de carbone.

**7.** Matériau actif d'électrode selon la revendication 1 ou la revendication 6, dans lequel le noyau comprend des composés exprimés comme les formules chimiques suivantes 1 et 2,

<Formule chimique 1> $Li[Li_aMe_{1-a}]O_{2+d}$

<Formule chimique 2> $Li[Li_bMe_cM'_e]O_{2+d}$

où $0 < a < 1$, $b + c + e = 1$; $0 < b < 1$, $0 < e < 0,1$ ; $0 \leq d \leq 0,1$, Me représente un ou plusieurs métaux choisis parmi un groupe constitué de Ti, V, Cr, Mn, Fe, Co, Ni, Cu, Al, Mg, Zr et B, et M' représente un ou plusieurs des métaux choisis parmi un groupe constitué du Mo, W, Ir, Ni, Mg et Mg.

**8.** Matériau actif d'électrode selon la revendication 1 ou la revendication 6, dans lequel le noyau comprend des composés exprimés comme les formules chimiques suivantes 3 à 7.

<Formule chimique 3> $Li_xCo_{1-y}M_yO_{2-\alpha}X_\alpha$

<Formule chimique 4> $Li_xCo_{1-y-z}Ni_yM_zO_{2-\alpha}X_\alpha$

<Formule chimique 5> $Li_xMn_{2-y}M_yO_{4-\alpha}X_\alpha$

<Formule chimique 6> $Li_XCO_{2-y}M_yO_{4-\alpha}X_\alpha$

<Formule chimique 7> $Li_xMeyM_zPO_{4-\alpha}X_\alpha$,

où $0,90 \leq x \leq 1,1$, $0 \leq y \leq 0,9$, $0 \leq z \leq 0,5$, $1-y-z > 0$, $0 \leq \alpha \leq 2$, Me représente un ou plusieurs métaux choisis parmi un groupe constitué de Ti, V, Cr, Mn, Fe, Co, Ni, Cu, Al, Mg, Zr et B, M représente un ou plusieurs éléments choisis parmi un groupe constitué de Mg, Ca, Sr, Ba, Ti, Zr, Nb, Mo, W, Zn, Al, Si, Ni, Mn, Cr, Fe, Mg, Sr, V et des éléments des terres rares, et X représente un élément choisi parmi le groupe constitué de O, F, S et P.

**9.** Matériau actif d'électrode selon la revendication 1 ou la revendication 6, dans lequel le noyau comprend des composés exprimés comme les formules chimiques suivantes 8 et 9 :

<Formule chimique 8> $pLi_2MO_3-(1-p)LiMeO_2$

<Formule chimique 9> $xLi_2MO_3-yLiMeO_2-zLi_{1+d}M'_{2-d}O_4$,

où $0 < p < 1$, $x + y + z = 1$ ; $0 < x < 1$, $0 < y < 1$, $0 < z < 1$; $0 \leq d \leq 0,33$, M représente un ou plusieurs éléments choisis parmi un groupe constitué de Mg, Ca, Sr, Ba, Ti, Zr, Nb, Mo, W, Zn, Al, Si, Ni, Mn, Cr, Fe, Mg, Sr, V et des éléments des terres rares, Me représente un ou plusieurs métaux choisis parmi un groupe constitué de Ti, V, Cr, Mn, Fe, Co, Ni, Cu, Al, Mg, Zr et B, M' représente un ou plusieurs métaux choisis parmi un groupe constitué de Ti, V, Cr, Mn, Fe, Co, Ni, Cu, Al, Mg, Zr et B.

**10.** Matériau actif d'électrode selon la revendication 1 ou la revendication 6, dans lequel le noyau comprend un ou plusieurs éléments choisis parmi un groupe constitué de Si, Sn, Al, Ge, Pb, Bi, Sb, d'un alliage Si-Y, d'un alliage Sn-Y1, de l'oxyde de lithium et de titane, de l'oxyde de vanadium, de l'oxyde de lithium et de vanadium, $SnO_2$, $SiO_x$ ($0 < x < 2$), du graphite naturel, du graphite artificiel, du carbone souple, du carbone dur, de carbure de brai en phase mésomorphe et de coke tiré, dans lequel Y1 représente Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, ou une combinaison de ceux-ci.

**11.** Electrode comprenant un matériau actif d'électrode selon l'une quelconque des revendications 1 à 10.

**12.** Pile au lithium comprenant une électrode selon la revendication 11.

**13.** Procédé de fabrication d'un matériau actif d'électrode selon l'une quelconque des revendications 1-10, consistant à :

préparer un matériau résultant obtenu en mettant en contact un noyau comprenant un matériau actif de cathode ou un matériau actif d'anode avec un oxyde libre de lithium en structure de spinelle ou un précurseur de celui-ci ; et tirer le matériau résultant à une température comprise entre 500 °C et 1000 °C entre 3 heures et 24 heures.

**14.** Procédé selon la revendication 13, dans lequel le précurseur comprend le sel de deux ou de plusieurs éléments choisis parmi un groupe constitué de métal et de métalloïde avec un poids atomique de 9 ou plus, dans lequel le sel est un ou plusieurs choisis dans le groupe constitué du sel d'acétate, du sel de chlorure, du sel de nitrate, de l'oxalate, et de l'isopropoxyde.

**15.** Matériau actif d'électrode, comprenant :

un noyau capable d'occlure et d'émettre du lithium; et
une couche de traitement de surface formée sur au moins une partie d'une surface du noyau,

dans lequel :

la couche de traitement de surface comprend un oxyde libre de lithium ayant une structure de spinelle,
la quantité d'oxyde libre de lithium est supérieure à 0% en poids et inférieure à 10% en poids sur une base d'un poids total de matériau actif d'électrode; et
le noyau comprend des composés exprimés comme les formules chimiques suivantes 8 et 9 :

<Formule chimique 8>      $pLi_2MO_3\text{-}(1\text{-}p)LiMeO_2$

<Formule chimique 9>      $xLi_2MO_{3\text{-}y}LiMeO_2\text{-}zLi_{1+d}M'_{2-d}O_4,$

où $0 < p < 1$, $x + y + z = 1$ ; $0 < x < 1$, $0 < y < 1$, $0 < z < 1$ ; $0 \leq d \leq 0,33$ ; M représente un ou plusieurs éléments choisis parmi un groupe constitué de Mg, Ca, Sr, Ba, Ti, Zr, Nb, Mo, W, Zn, Al, Si, Ni, Mn, Cr, Fe, Mg, Sr, V et des éléments des terres rares ; Me représente un ou plusieurs métaux choisis parmi un groupe constitué de Ti, V, Cr, Mn, Fe, Co, Ni, Cu, Al, Mg, Zr et B ; M' représente un ou plusieurs métaux choisis parmi un groupe constitué de Ti, V, Cr, Mn, Fe, Co, Ni, Cu, Al, Mg, Zr et B, et **caractérisé en ce qu'**un rapport d'une intensité de pic d'une face cristalline (111) à une intensité de pic d'une face cristalline (311), I(111) / I(311), de l'oxyde libre de lithium ayant une structure de spinelle est supérieur à 0,3.

## FIG. 1

## FIG. 2

# FIG. 3

# FIG. 4

# FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CA 2373756 A1
- US 20030108790 A1
- EP 0997956 A1
- US 2011076556 A1
- US 6641955 B1

**Non-patent literature cited in the description**

- **G.T.K FEY et al.** *Journal of Power Sources,* 2005, vol. 146, 245-249